# EUROPÄISCHE PATENTANMELDUNG

(11) **EP 2 484 520 A1**
(43) Veröffentlichungstag der Anmeldung: **08.08.2012**
(21) Anmeldenummer: 12166182.1
(22) Anmeldetag: 23.02.2006
(51) Int. Cl.: B32B 27/32, B32B 27/34, B32B 27/30, B29C 55/16, B29C 55/02, B65D 65/40

(54) **Hochfeste barrierefolie für verpackungszwecke auf polypropylenbasis, verfahren zu ihrer herstellung und ihre verwendung**

(30) Priorität: 04.05.2005 DE 102005020913
(62) Teilanmeldung aus: 06723090.4
(71) Anmelder: Brückner Maschinenbau GmbH, 83313 Siegsdorf (DE)
(72) Erfinder: Enzinger, Helmut, 83313 Siegsdorf (DE); Keller, Lajos, Edward, 2331 Luxembourg (LU)
(74) Vertreter: Kuhnen & Wacker

(57) **Zusammenfassung**

In hochfester, brillianter Qualität herstellbare Barrierefolie für Verpackungszwecke, insbesondere für die Verpackung von Lebens- und Genussmitteln, in Form einer Mehrschichtfolie auf der Basis mindestens einer Trageschicht aus einem biaxial orientierten Polypropylenfolie (PP-Folie) mit mindestens einer funktionalen Schicht auf der Basis eines amorphen oder teilkristallinen Polyamids (PA), die durch simultanes Recken einer koextrudierten mehrschichtigen Primärfolie hergestellt ist, wobei die funktionale PA-Schicht eine Außenschicht der Folie bildet oder eine zentrale Innenschicht der Folie bildet, die zwischen zwei Trageschichten angeordnet ist, sowie Verfahren zu ihrer Herstellung und ihre Verwendungen.

## Beschreibung

Die vorliegende Erfindung betrifft eine hochfeste Barrierefolie für Verpackungszwecke, insbesondere für die Verpackung von Lebens- und Genussmitteln und anderen empfindlichen Waren, in Form einer Mehrschichtfolie, deren mechanische Eigenschaften weitgehend von einer biaxial orientierten Folie bestimmt werden, für die als folienbildendes Polymer ein kristallisierbares Polypropylen verwendet wird, und die außerdem als funktionale Schicht oder Barriere auf ihrer Oberfläche oder ggf. in einer Innenschicht eine koextrudierte Lage auf der Basis eines amorphen oder teilkristallinen Polyamids (PA) oder einer Mischung eines solchen Polyamids mit Ethylen-Vinylalkohol-Copolymeren (EVOH) aufweist.

Die Erfindung betrifft ferner Verfahren zur Herstellung einer solchen Folie, sowie die Verwendung dieser Folie für Verpackungszwecke, insbesondere für die Verpackung von Lebens- und Genussmitteln, wobei die hervorragenden optischen Eigenschaften, Festigkeitseigenschaften sowie Barriereeigenschaften der Folie genutzt werden. Verpackungen auf der Basis von Kunststofffolien sind aus dem modernen Leben nicht mehr wegzudenken. Je nach den zu verpackenden Waren werden an derartige Kunststofffolien verschiedenartige Anforderungen gestellt. Bei Kunststofffolien für die Verpackung von Lebens- und Genussmitteln stehen dabei Eigenschaften im Vordergrund, die die Haltbarkeit des verpackten Lebens- oder Genussmittels auf den Vertriebswegen und beim Endverbraucher bis zum Verbrauch des Lebensmittels sichern. Zusätzliche Anforderungen an die Folien ergeben sich daraus, dass die Verpackung in der Regel mit Informationen über die verpackten Waren, Herstellerangaben u.ä. versehen werden muss und auch ein Werbeträger ist, der ein ansprechendes, verkaufsförderndes Aussehen aufweisen soll.

Teil der Qualitätssicherung durch die Kunststofffolie der Verpackung ist bei zahlreichen Lebensmittel ein Schutz gegen Aromaverluste und die Verhinderung des Austritts von geruchsintensiven Stoffen sowie, in zahlreichen Fällen, ein Schutz vor Luftsauerstoff und/cader vor Luftfeuchtigkeit und/oder vor Feuchtigkeitsverlusten aus der Ware. Folien mit derartigen Eigenschaften werden auch als Barrierefolien oder Sperrschicht-folien bezeichnet.

Um die Bedruckbarkeit der Folien zu gewährleisten, muss die Folienoberfläche bestimmte Eigenschaften aufweisen, zu denen eine geeignete Oberflächenspannung gehört. Ferner ist auch das Aussehen und die Haptik der Folie eine für Verkaufs zwecke wichtige Eigenschaft, d.h. ihre Oberflächenqualität und Steifigkeit bzw. ihre Formbeständigkeit und Steifigkeit oder Weichheit.

Da die genannten verschiedenen Anforderungen normalerweise nicht von einem einzigen Folienmaterial gleichzeitig zu erfüllen sind, ist es erforderlich, ein Folienmaterial einer speziellen Oberflächenbehandlung und/oder Beschichtungsbehandlung zu unterziehen und/oder die gewünschten Eigenschaften dadurch zu sichern, dass man statt einfacher Folien Mehrschichtfolien verwendet, in denen verschiedene Schichten unterschiedliche Aufgaben übernehmen.

In der Regel umfassen Mehrschichtfolien mindestens eine die wesentlichsten mechanischen Eigenschaften bestimmende Trageschicht aus einem filmbildenden Haupt-Polymer, außen oder innen liegende Barrieren für die Erreichung der gewünschten Barriere-Eigenschaften, sowie Außenschichten, die die Bedruckbarkeit, die Beschichtbarkeit oder die Siegelfähigkeit, die zur Herstellung geschlossener Verpackungen oder von Laminaten erforderlich ist, gewährleisten.

Wenn an die Verpackungsfolien hohe Anforderungen gestellt werden, sind im Lebensmittel- und Genussmittelbereich heute häufig Folien auf Polyesterbasis (PET; Polyethylenterephthalat) im Einsatz, die eine gute Festigkeit, gute optische Eigenschaften und eine gute Beschichtbarkeit für glänzende Metallfilme, insbesondere aus Aluminium, oder für durchsichtige Keramikbeschichtungen, insbesondere aus SiOx oder AlOx, aufweisen. Die dünnen Metall- oder Keramikfilme verleihen den Folien hohen Anforderungen genügende Barriereeigenschaften, insbesondere im Hinblick auf die Durchlässigkeit für Wasserdampf (Water Vapor Transmission Rate; WVTR; gemessen in g/ (m²d) bzw. g/ (m²24h)) und für Sauerstoff (Oxygen Transmission Rate; OTR, gemessen in cm³/ (m²dbar) bzw. cm³/ (m²24h) bei einem Atmosphärendruck von 1 bar). Um die für die Verpackungsherstellung erforderliche Verschweißbarkeit bzw. Versiegelbarkeit der Folien zu gewährleisten, weisen sie üblicherweise noch eine zusätzliche äußere Polyolefinschicht auf, beispielsweise eine über der Metallisierung oder Keramikbeschichtung vorgesehene Polyethylenschicht, beispielsweise aus HDPE oder LDPE. Obwohl diese Polyesterfolien hohen Qualitätsanforderungen genügen, weisen sie doch u.a. den Nachteil auf, dass Polyesterpolymere relativ teuer sind und eine relativ hohe Dichte aufweisen.

Es wird daher versucht, statt auf Polyesterfolien auf Polyolefinfolien zurück zu greifen, insbesondere auf Polypropylenfolien, die insbesondere als biaxial orientierte Polypropylenfolien (BOPP-Folien) in großen Mengen vergleichsweise billig herstellbar sind und die bei guter Festigkeit leichter sind als Polyesterfolien. Polypropylenfolien als solche weisen jedoch nicht die für anspruchsvolle Verwendungen erforderlichen Barriereeigenschaften auf, und sie lassen sich auch nicht ohne weiteres ohne Vorbehandlung mit glänzenden Aluminium- oder klaren Keramikbeschichtungen versehen. Dazu ist eine Oberflächenbehandlung der orientierten Polypropylenfolien erforderlich, die als Korona-, Flammen- oder Plasmabehandlung erfolgt und bei der die für die Benetzbarkeit wichtige Oberflächenspannung bzw. Oberflächenpolarität erhöht wird. Diese Oberflächenbehandlungen führen jedoch bei BOPP-Folien zu einer störenden Geruchsentwicklung, die Fachleuten als "maggiartiger" Geruch vertraut ist. Metall- oder keramikbeschichtete Polypropylenfolien sind ferner für Anwendungen weniger geeignet, bei denen die Konsumenten klare glänzende und cellophan- bzw. zellglasartige, d.h. knisternde oder knitternde, Verpackungsmaterialien gewohnt sind bzw. erwarten.

Aus der EP 0 546 709 A1 bzw. dem entsprechenden US Patent Nr. 5,591,520 ist es bekannt, dass das Aufbringen einer dünnen koextrudierten Schicht auf der Basis eines amorphen oder ggf. semikristallinen Polyamids, die mittels einer speziellen Haftschicht mit der Polypropylen-Basisfolie verbunden wird, die Benetzungs-Oberfächenspannung einer solchen beschichteten Polypropylenfolie stark erhöht, so dass sehr gut haftende Aluminiumschichten aufgedampft werden können. Gemäß dem erläuternden Beispiel der EP 0 546 709 Al erfolgt eine Koextrusion einer dreischichtigen Mehrschichtfolie mit einer ersten Schicht aus einem amorphen Polyamid (Kondensationsprodukt von Hexamethylendiamin mit Isophthalsäureanhydrid), einer zweiten Schicht, die die eigentliche tragende Folienschicht bildet und im wesentlichen aus einem Polypropylenhomopolymer besteht, dem zur Verbesserung der Haftung der Polyamidschicht ein mit Maleinsäureanhydrid modifiziertes Polypropylen zugesetzt ist, sowie einer dritten Schicht, die als Schicht für die Verschweißbarkeit oder Versiegelbarkeit dient und aus einem für diesen Zweck bekannten Ethylen-Propylen-l-Buten-Terpolymer besteht.

Die koextrudierte Schmelze wird auf einer Kühlwalze zu einer Primär-Mehrschichtfolie verfestigt und anschließend sequenziell zuerst in Maschinenrichtung (MD) auf das 3,5-fache ihrer ursprünglichen Länge und dann anschließend in Querrichtung (TD) auf das 8-fache ihrer ursprünglichen Breite verstreckt (Reckverhältnis von 28 bzw. Flächenvergrößerung auf das 28-fache). Die Polyamidseite der erhaltenen Folie wies eine Benetzungs-Oberflächenspannung von mehr als 50 dyn/cm auf. Die Folie wurde auf übliche Weise durch Vakuumbedampfung bis zu einer optischen Dichte von 2,5 mit einer Aluminiumschicht versehen.

Nach dem Bedampfen mit Aluminium wies die erhaltene Folie eine Wasserdampfdurchlässigkeit (WVTR) von 0,02 g/100inch²/24h bzw. - umgerechnet - von 0,31 g/m²d sowie eine Sauerstoffdurchlässigkeit (OTR) von 1,0 cm³/100inch²/24h bzw. 15,5 cm³ / (m²d) auf.

Insbesondere die Sauerstoffdurchlässigkeit der metallisierten Folie liegt deutlich über derjenigen, die für hochwertige moderne Barrierefolien gefordert wird und die z.B. bei metallisierten Folien auf Polyesterbasis unter 0,1 cm³/m²/24h liegt.

Irgendwelche Angaben zur Festigkeit und zum Aussehen der gemäß EP 0 546 709 A1, erhaltenen Folie werden nicht gemacht. Dem mit dem biaxiales Orientieren von Polypropylenfolie vertrauten Fachmann ist jedoch geläufig, dass bei dem geschilderten sequenziellen Recken, bei dem sich an ein geringes Recken in Maschinenrichtung (MD) ein stärkeres Recken in Querrichtung (TD) anschließt, die Festigkeitseigenschaften der erhaltenen biaxial gereckten Polypropylenfolie (Zugfestigkeit, Elastizitätsmodul) in MD-Richtung niedriger sind als in TD-Richtung, wobei typische Werte für die Zugfestigkeit unter den angegebenen Herstellungsbedingungen etwa 140 N/mm² in MD-Richtizng und 280 N/mm² in TDx-Richtung sind. Entsprechend ist die Reißdehnung bei solchen Folien in MD-Richtung höher (typischerweise 150 bis 250%) als in TD-Richtung (50 bis 60%). Ähnliche Verhältnisse wie für die Zugfestigkeit gelten auch für den Elastizitätsmodul.

Es konnte nicht festgestellt werden, dass aluminiumbeschichtete Folien gemäß EP 0 546 709 A1 jemals in nennenswertem Umfang kommerziell getestet oder verwendet wurden. Angaben über das Aussehen, die sonstigen Folieneigenschaften und über die Aroma- und Geruchsretention der Folien sind der Beschreibung der EP 0 546 709 A1 genauso wenig zu entnehmen wie irgendwelche Angaben zu bevorzugten Verwendungen der offenbarten orientierten Polypropylenfolien mit Polyamidbeschichtung und Aluminiumbedampfung. Des weiteren ist nicht auszuschließen, dass die prozesstechnischen Limitationen der Reckverhältnisse zu nicht tolerierbar schlechten Dickentoleranzen führen.

Aus der Druckschrift DE 699 16 111 T2 ist eine Barrierefolie für Verpackungszwecke in Form einer Mehrschichtfolie auf der Basis mindestens einer tragenden Kernschicht in Form einer Ethylen-Vinylalkohol-Copolymerfolie mit mindestens zwei Außenschichten aus Ethylenhomo- oder -copolymeren bekannt, die durch simultanes Recken einer koextrudierten mehrschichtigen Primärfolie hergestellt ist. Eine solche Folie kann als zusätzliche Schicht(en), z.B. zur Erhöhung der Gesamtmasse und/oder zur Verbesserung der Schrumpfung und/oder der mechanischen Eigenschaften usw. eine oder mehrere Zwischenschicht(en) auf der Basis verschiedener anderer Polymerer enthalten, wobei auch Polyamide genannt werden. Es wird eine siebenschzchtige Folie beschrieben, bei der auf beiden Seiten einer Kernschicht mit Polyamidzusatz, der als Weichmacher für das Ethylen-Vinylalkohol-Copolymer dient, jeweils eine Polyamid-Verbindungsschicht vorgesehen ist.

Aus der Druckschrift EP 0 311 293 B1 ist eine Barrierefolie für Verpackungszwecke, insbesondere als Barriere gegen Sauerstoff, Stickstoff und Kohlendioxid, in Form einer Mehrschichtfolie auf der Basis mindestens einer Trageschicht in Form einer Polypropylenfolie (PP-Folie) mit mindestens einer koextrudierten funktionalen Schicht auf der Basis von Ethylen-Vinlyalkohol-Copolymeren (EVOH) bekannt.

Der vorliegenden Erfindung liegt die Aufgabe zugrunde, qualitativ hochwertige brilliante, d.h. klare und glänzende, hochfeste Verpackungsfolien mit einer hervorragenden Undurchlässigkeit für Aromen und Gerüche zu schaffen, die zusätzlich metallisierbar ist oder mit klaren Keramikbeschichtungen versehen werden kann und dann Barriereeigenschaften, insbesondere auch im Hinblick auf die Sauerstoffdurchlässigkeit, aufweist, die in der Größenordnung moderner Barrierefolien auf der Basis von beschichtetem Polyethylenterephthalat liegen, die jedoch die Kosten- und Gewichtsvorteile sowie Produktionsvorteile von Polypropylenfolien gegenüber Polyesterfolien aufweisen.

Oberraschenderweise stellten die Erfinder fest, dass diese Aufgabe gelöst wird, wenn man eine Mehrschichtfolie aus Polypropylen und einer Polyamidschicht simultan und berührungsfrei mit einem hohen Reckverhältnis reckt, das einer Flächenvergrößerung der Primärfolie auf das 40- bis 80-fache entspricht, so dass in Maschinenrichtung (MD) Festigkeitseigenschaften erhalten werden, die mindestens gleich, in der Regel jedoch besser sind als in Querrichtung (TD), und insgesamt eine Folie mit hoher Festigkeit erhalten wird.

Da die Erfinder an den von ihnen produzierten Testfolien mit PA-Außenschichten ferner feststellen konnten, dass die Polyamidschicht als solche eine hohe Aromadichte und Geruchsdichte der Folie auch ohne zusätzliche Beschichtung gewährleistet und außerdem einen erheblichen Beitrag zur Gesamtfestigkeit und Steifigkeit der hochgereckten Polypropylenfolie liefert, wurde als Abwandlung auch eine weitere verwandte Folie entwickelt, die eine Polyamidschicht im Folienkern zwischen zwei Schichten aus orientierbaren Polyolefinen, z.B. zwischen zwei gleichen oder ggf. unterschiedlichen Polypropylenschichten oder z.B. einer Polypropylenschicht und einer Polypropylen-Regeneratschicht, aufweist.

Die neuen Folien gemäß der vorliegenden Erfindung werden durch die Ansprüche 1 und 2 des beigefügten Anspruchssatzes wiedergegeben.

Vorteilhafte Ausgestaltungen einer oder beider Folien gemäß den Ansprüchen 1 und/oder 2 finden sich in den abhängigen Ansprüchen 3 bis 20.

Die Ansprüche 21 bis 26 beschreiben vorteilhafte Ausführungsformen von Verfahren zur Herstellung solcher Folien, und die Ansprüche 27 und 28 betreffen die Verwendung von Folien gemäß den Ansprüchen 1 bis 20 als Verpackungsfolien für Lebens- und Genussmittel.

Die Erfinder haben festgestellt, dass dann, wenn man eine Primärfolie mit einer Basisschicht aus einem orientierbaren Polypropylen und einer unter Vermittlung durch eine Haftschicht darauf aufgebrachten Schicht aus einem amorphen oder semikristallinen Polyamid oder aus einem solchen Polyamid und einem Barrierepolymer wie Ethylen-Vinylalkohol-Copolymer einem berührungsfreien simultanen Recken mit einem hohen Reckverhältnis unterzieht, eine klare Folie mit hervorragenden Oberflächeneigenschaften, Festigkeitswerten und hohem Glanz (Gloss; ASTM 2457) über 100, insbesondere im Bereich von etwa 101 bis 107, und hoher Klarheit erhalten wird. Bringt man auf die äußere Polyamidschicht auf an sich bekannte Weise eine Aluminiumbeschichtung oder Keramikbeschichtung aus SiOx oder AlOx auf, werden auch bei sehr dünnen Beschichtungen hervorragende Barriereeigenschaften erhalten. So führt beispielsweise das Aufbringen einer Aluminiumschicht in einer optischen Dichte von 2,3 zu einer Folie mit einer Sauerstoffdurchlässigkeit (OTR), die im Bereich von 0,05 bis 0,5 cm³/m³d bei 23°C und 75% relativer Luftfeuchtigkeit liegt und die somit um das 30- bis 300-fache besser ist als die der in der EP 0 546 709 A1 beschriebenen Folie. Die Wasserdampfdurchlässigkeiten (WVTR; ASTM E 96 bei 38°C. 90% relative Luftfeuchtigkeit) der in einer optischen Dichte von 2,3 metallisierten Folie liegen unter 0,5 g/m²24h, wobei, je nach Oberflächenbehandlung vor dem Metallisieren, Werte zwischen 0,3 und 2,5 erhalten wurden.

Als hohes Reckverhältnis werden dabei insbesondere Reckverhältnisse im Bereich von 40 bis 80 (errechnet als Produkt des Reckens in MD und in TD Richtung) gewählt. Dabei wird die Primär-Mehrschichtfolie in Maschinenrichtung (MD) auf wenigstens des 6fache ihrer Länge gereckt, wobei ein Recken der Primär-Mehrschichtfolie simultan in MD auf wenigstens das 7fache und in Querrichtung (TD) auf weniger als das 7fache, vorzugsweise in MD auf mehr als das 8 fache, vorzugsweise auf wenigstens das 9fache, und in TD auf weniger als das 8fache, erfolgt.

Die Erfinder führen die drastische Verbesserung z.B. der Sauerstoffbarriere der metallisierten erfindungsgemäßen Folie darauf zurück, dass bei dem in der EP 0 546 709 A1 beschriebenen sequenziellen Recken in Längsrichtung unter Verwendung der üblichen Walzenanordnungen die Ausbildung einer glatten Oberfläche der Polyamidschicht verhindert wird und sich diese Schicht auch beim nachfolgenden Recken in Querrichtung nicht mehr glättet, da Polyamide zu hohe Schmelzpunkte aufweisen und eine nachträgliche Oberflächenverbesserung durch Bildung einer intermediären schmelzflüssigen Oberflächenschicht nicht möglich ist. Die beim sequenziellen Recken erzeugten Oberflächenmängel der Polyamidschicht führen dazu, dass beim nachfolgenden Aufbringen einer Metallisierung keine fehlerfreie dichte Metallschicht ausgebildet werden kann, die für hohe Barriereeigenschaften, insbesondere eine hohe Barrierewirkung gegenüber Sauerstoff, erforderlich ist. Außerdem stellten die Erfinder fest, dass bei den hohen Reckverhältnissen; die durch das simultane Recken möglich werden, eine Folie mit hoher Festigkeit erhalten wird, die in vielen ihrer Eigenschaften einer Zellglasfolie ähnelt, also beispielsweise knisternd/knitternd und von brillianter Klarheit und hohem Glanz ist. Die Festigkeitswerte sind dabei in der Richtung, die der MD der Herstellung entspricht, mindestens gleich wie, in der Regel jedoch besser als in der dazu senkrechten Richtung, die TD entspricht.

So liegt die Zugfestigkeit (ASTM D 822) der Folie in MD im Bereich von 170-280 N/mm² und in TD im Bereich von 130-215 N/mm², und ihre Reißdehnung (ASTM D 82) in MD im Bereich von 50-120% und in TD im Bereich von 100-220%. Als Werte für den Elastizitätsmodul (ASTM D 882) wurden für die Testfolien in MD Werte im Bereich von zwischen etwa 2750 N/mm² und etwa 3630 N/mm² gemessen, während die entsprechenden Werte in TD im Bereich von mehr als etwa 1900 N/mm² bis etwa 2600 N/mm² lagen.

Aufgrund der inhärenten Festigkeitseigenschaften der erfindungsgemäßen simultan gereckten Folie, insbesondere anhand des Verhältnisses der Festigkeiten in den beiden Hauptrichtungen der Folie, und aufgrund ihres Glanzes kann der erfahrene Fachmann eine erfindungsgemäße, simultan hochgereckte Folie sofort von einer Folie unterscheiden, deren Herstellung in EP 0 546 709 A1 beschrieben wird.

Das bevorzugte Verfahren zur Durchführung des simultanen Reckens ist das Recken auf einer simultanen Reckanlage mit Linearmotorbetrieb (LISIM®). Die weniger vorteilhaften Verfahren des simultanen Reckens mit einer mechanischen simultanen Reckanlage (MSO; Mechanical Simultaneous Orienter; mit Kettenbetrieb) und der Herstellung als Schlauchfolie mit einem Recken nach dem BUBBLE oder DOUBLE BUBBLE-Verfahren sollen jedoch vom Bereich der Erfindung ebenfalls umfasst sein. Bei einer Herstellung als mehrschichtige Schlauchfolie wird dabei der Schichtverbund bevorzugt so angeordnet, dass die PA-Schicht die Innenseite des durch Aufblasen gereckten Schlauchs bildet.

Um optimale Folieneigenschaften zu erhalten, haben die Erfinder festgestellt, dass es beim simultanen Recken einer Flachfolie z.B. nach der LISIM®-Technik vorteilhaft ist, bei der Herstellung der Mehrschichtfolie die Polymeren so zu koextrudieren, dass die Polyamidschicht, wenn sie eine Außenschicht darstellt, direkt mit der Kühlwalze in Kontakt kommt, da auf diese Weise Oberflächenstörungen, die durch das auf die andere Seite der Schmelze einwirkende Luftmesser erzeugt werden, vermieden werden, und außerdem Probleme einer Ansammlung von Polyamidschmelze an der Extrusionsdüsenkante vermieden werden.

Wenn die Polyamidfolie eine Außenschicht der primär erzeugten Mehrschichtfolie bildet, sollte ihre Dicke nicht zu groß sein und unter 5 µm, vorzugsweise unter 2,5 µm liegen, da sonst die inhärente, bei Recken erhöhte Festigkeit der Polyamidschicht dazu führt, dass sich die Folie beim Abkühlen einrollt oder verzieht. Andererseits kann die Polyamidschicht der gereckten Folie jedoch auch außerordentlich dünn gehalten werden, beispielsweise im Bereich von etwa 0, 1 µm oder sogar darunter liegen, wenn es vor allem darum geht, die Bedruckbarkeit oder Beschreibbarkeit der erhaltenen Folie zu verbessern und Festigkeits- und Dichtigkeitseigenschaften von untergeordneter Bedeutung sind. Als Anhaltswerte werden Schichtdicken der PA-Außenschicht von weniger als 0,5 µm, bis hinab zu 0,1 µm, dann gewählt, wenn es nur um die Bedruck- und Beschichtbarkeit geht; Werte im Bereich von 0,5 bis 1,0 µm liefern bei der Vakuumbeschichtung, insbesondere Metallisierung mit Aluminium, hervorragende Barrieren; und Werte im Bereich von 1,0 bis 2,0 µm ergeben hervorragende Ergebnisse beim Geruchs- und Aroma-schutz und den Barrierewirkungen.

Eine Folie, die als Haupt-Strukturelemente eine Trageschicht aus einem simultan biaxial gereckten Polypropylen und eine koextrudierte und gleichzeitig mitgereckte Polyamidschicht aufweist, weist in der Regel noch weitere Schichten auf. So ist zwischen der Polypropylenschicht und der Polyamidschicht in der Regel eine haftverbessernde Schicht vorgesehen, die beispielsweise eine Schicht aus einem modifizierten Polypropylen sein kann, wie sie in EP 0 546 709 A1 beschrieben wird.

Außerdem wird vorzugsweise auf der der Polyamidschicht entgegengesetzten Seite der Folie eine thermoplastische verschweißbare bzw. versiegelbare Polyolefinschicht angeordnet, die aus einem für diese Zwecke bekannten und üblichen Polymer, beispielsweise einem Polyethylen-Propylen-Buten-Terpolymer oder einem ähnlichen Polymer bestehen kann und die ggf. mittels einer zwischengelagerten Haftschicht oder einer die Abziehbarkeit der Basisfolie erleichternden Zwischenschicht mit der Polypropylenschicht verbunden sein kann.

Die Erfinder haben festgestellt, dass die Polyamidaußenschicht sich aufgrund ihrer hohen Oberflächenqualität gut für eine direkte Metallisierung oder Keramikbeschichtung eignet. Es ist jedoch zusätzlich möglich, diese Schicht einer üblichen Korona-, Plasma- oder Flammenbehandlung zu unterziehen und damit die Oberflächeneigenschaften weiter zu modifizieren. Gegenüber einer entsprechenden Behandlung einer orientierten Polypropylenfolie wird dabei festgestellt, dass sich kein störender Geruch entwickelt. Es wurde dabei jedoch auch festgestellt, dass eine Flammenbehandlung die Qualität einer nachfolgenden Metallisierung eher verschlechtert und daher in der Regel weniger vorteilhaft ist.

Da sich herausstellte, dass die Polyamidschicht als solche, auch ohne zusätzliche Beschichtung, eine hohe Aroma- und Geruchsdichtigkeit der Folie bewirkt, und dass sie außerdem die Steifigkeit und mechanischen Eigenschaften der erhaltenen Barriere-Mehrschichtfolie deutlich verbessern kann, wurde eine weitere Folie geschaffen, bei der gemäß Anspruch 2 die Polyamidschicht im Kern einer Barriere-Mehrschichtfolie angeordnet ist, in der sie beidseitig von gleichen oder verschiedenen Polypropylen-Trageschichten bedeckt ist. In diesem Falle werden die Haftschichten zu beiden Seiten der Polyamidschicht extrudiert, und üblicherweise werden auf die Außenschichten der Polypropylenschichten zusätzliche funktionelle Schichten, in der Regel aus Propylen-Ethylen-Copolymeren oder Propylen-Ethylen-Butylen-Terpolymeren aufgebracht, die eine Verbesserung der Oberflächenbehandlung und/oder eine Verschweiß- und Versiegelbarkeit der Folien ermöglichen. Wenn die Polyamidschicht im Kern einer mehrschichtigen Folie angeordnet wird, kann sie deutlich dicker sein als im Falle ihrer Anordnung als Außenschicht, d.h. sie kann eine Dicke bis zu etwa 10 µm aufweisen, da sie bei einer Anordnung im Zentrum der dickeren Folie nicht zu einer Verzerrung oder zu einem Aufwellen oder Einrollen der Folie führt.

Wenn im Rahmen der vorliegenden Anmeldung von Polypropylen gesprochen wird, wird ein hochwertiges, durch biaxiales Recken orientierbares Polypropylen gemeint, das vorzugsweise ein Polypropylenhomopolymer mit hoher Isotaktizität ist. Es können jedoch auch andere für vergleichbare Zwecke verwendete Polypropylenqualitäten verwendet werden, beispielsweise solche, die einen geringfügigen Anteil an copolymerisierten anderen Monomeren enthalten. Auf die Definition des Begriffs "Polypropylen" in der EP 0 546 709 B1 wird auch für die Zwecke der vorliegenden Anmeldung ergänzend verwiesen.

Das gleiche gilt bezüglich der Definition des Begriffs "amorphes Polyamid" oder "semikristallznes Polyamid" und/oder bezüglich der Definition der zwischen dem Polypropylen und der Polyamidschicht in der Regel erforderlichen Haftschicht. Auch bezüglich dieser Bestandteile wird auf die entsprechenden Materialangaben in der EP 0 546 709 A1 für die Zwecke der vorliegenden Erfindung ergänzend zu den Materialangaben in den nachfolgenden Beispiele verwiesen. Außerdem können alle Schichten, je nach dem beabsichtigten Verwendungszweck der Folie, verschiedene übliche Zusätze entha1ten, von denen beispielsweise zu nennen sind mineralische oder organische Zusätze zur Bildung von Mikrohohlräumen, Füllstoffe, Absorptionsmittel, UV- und Licht-Schutzmittel, Farbstoffe und deckende Pigmente.

Nachfolgend wird die Erfindung anhand von Ausführungsbeispielen weiter erläutert, wobei der Fachmann den geschilderten Verfahrensbedingungen, Materialien und Folieneigenschaften weitere Angaben zur Erfindung und ihren Vorteilen entnimmt.

In den Beispielen beschreiben die Beispiele 1 bis 15 die Herstellung einer insgesamt 5-schichtigen Mehrschichtfolie mit einer Polyamidaußenschicht, deren Schichtaufbau vor Beispiel 1 grundsätzlich näher erläutert wird.

Die Beispiele 16 bis 18 beschreiben eine 7-schichtige Mehrschichtfolie mit einer zentralen Polyamidschicht, deren genereller Aufbau vor Beispiel 16 erläutert wird.

Die Eigenschaften der in allen Beispielen 1 bis 18 erhaltenen Barriere-Mehrschichtfolien sind in der beigefügten Tabelle mit Testergebnissen zusammengefasst.

Bei den in den Beispielen mit ihren Handelsbezeichnungen angegebenen Materialien handelt es sich um Materialien der folgenden Art:

| | |
|---|---|
| HP 522 H: | isotaktisches Polypropylen-Homopolymer "Moplen®" HP 522 H der Firma Basell; |
| PA 3426: | DuPont^{™} Selar® PA 3426 amorphes Polyamidharz; |
| Bynel® 21 E 781: | anhydrid-modifiziertes Ethylenacrylatharz der Firma DuPont^{™}; |
| Bynel® 50 E 739: | anhydrid-modifiziertes Polypropylenharz der Firma DuPont^{™}; |
| TD 110 BF: | C2/C4-Terpolymer-PP-Harz Borseal™ TD110BF der Firma Borealis A/S, Dänemark; |
| TD 120 BF: | C2/C4-Terpolymer-PP-Harz Borseal^{™} TD120BF der Firma Borealis A/S, Dänemark. |

### Beispiele

### Vor Beispiel 1:

In den Beispielen 1 bis 15 wurden 5-schichtige Barriere-Mehrschichtfolien mit einer Polyamidschicht als Außenschicht hergestellt, wobei eine Extrusion durch eine 5-schichtige Breitschlitz-Schmelzedüse auf eine Kühlwalze erfolgte und die auf der Kühlwalze gebildete 5-schichtige Primärfolie sofort auf einer Laboratariums-LISIM®-Reckanlage der Firma Brückner simultan wie in den Beispielen angegeben gereckt wurde.

Die Schichtanordnung der Schmelzen zur Herstellung der Mehrschichtfolie wurde dabei mittels der folgenden Düsenanordnung mit den angegebenen Fördereinrichtungen erzeugt:

| | |
|---|---|
| Schicht A - | Außenschicht, Luftmesserseite: 35 mm Einschneckenextruder; |
| Schicht B - | Zwischenschicht: 50 mm Einschneckenextruder mit Schmelzepumpe; |
| Schicht C - | Kernschicht: 55 mm Zweischneckenextruder mit Schmelzepumpe; |
| Schicht D - | Zwischenschicht: 43 mm Einschneckenextruder mit Schmelzepumpe; |
| Schicht E - | Außenschicht, Kühlwalzenseite: 35 mm Einschneckenextruder |

Es ist darauf hinzuweisen, dass die Bezeichnung der Schichten A bis E durch die Anordnung der Breitsehlitzdüsen für die Schmelzeextrusion bzw. deren Position gegenüber der Kühlwalze und dem gegenüberliegenden Luftmesser vorgegeben ist.

In den Beispielen 1 bis 5 wird die Polyamidschicht als Schicht A extrudiert, während in den Beispielen 6 bis 15 die Polyamidschicht als Schicht E auf der Kühlwalzenseite extrudiert wird, was bevorzugt ist.

### Beispiel 1

Materialien und die Betriebsbedingungen der fünf Extruder waren wie folgt:

| | |
|---|---|
| Schicht A: | PA 3426, Extruder mit einer Fördergeschwindigkeit von 30 U/min. |
| Schicht B: | Bynel 21E781; Extruder mit Schmelzepumpe bei einer Fördergeschwindigkeit von 30 U/min. |
| Schicht C: | HP 522 H; Kernextruder mit Schmelzepumpe mit einer Fördergeschwindigkeit von 45,7 U/min |
| Schicht D: | HP 522 H: Extruder mit Schmelzepumpe mit einer Fördergeschwindigkeit von 8 U/min. |
| Schicht E: | TD 110 BF, Extruder mit einer Fördergeschwindigkeit von 26 U/min. |

Die nach der Koextrusion der 5-schichtigen Schmelze erhaltene Primärfolie wurde unter Bedingungen, wie sie für die simultane Orientierung von biaxial orientierten Polypropylenfolien (S-BOPP-Folien) optimiert wurden, orientiert, und zwar mit einer 8-fachen Reckung in Maschinenrichtung (MD) und einer 7-fachen Reckung in Querrichtung (TD), und zwar nach Maßgabe der Vergrößerung eines auf die Basisfolie vor dem Recken aufgedruckten Gitters. Es wurde eine Folie mit einer Gesamtdicke von 20 µm erhalten, und die Dicke der Polyamidschicht (Schicht A) betrug etwa 1,2 µm.

Die Folie wurde unter Standard-Bedingungen für BOPP-Folien einer Koronabehandlung der Oberfläche der Polyamidschicht (A) unterzogen.

Die erhaltene Folie war von brilliantem Aussehen und knisterte. Die Benetzungs-Oberflächenspannung wurde zu mehr als 55 dyn/cm gemessen, ohne dass die für koronabehandelte BaPP-Folzen üblichen "maggiartigen" Gerüche feststellbar waren.

### Beispiel 2

Die Folienherstellung erfolgte wie in Beispiel 1, außer dass zur Extrusion der Schicht A die Fördergeschwindigkeit des entsprechenden Extruders auf 15 U/min vermindert wurde. Die Dicke der Polyamid-Außenschicht (Schicht A) betrug etwa 0,6 µm. Die erhaltene Folie hatte das gleiche brilliante Aussehen und die gleiche hohe Oberflächenspannung wie in Beispiel 1.

### Beispiel 3

Die Folienherstellung erfolgte wie in Beispiel 2, wobei jedoch in diesem Falle keine Korona-Behandlung erfolgte. Das Aussehen der Folie war wie in den vorausgehenden Beispielen, und die Oberflächenspannung der frisch hergestellten Folie betrug etwa 50 dyn/cm.

Auf einer Schneidmaschine wurde mit den Proben der Beispiele 1, 2 und 3 eine zusammengesetzte Rolle hergestellt, und alle drei Folien der Rolle wurden unter identischen Bedingungen, die Standardbedingungen für die Metallisierung einer BOPP-Folie entsprechen, in einem Metallbedampfer der Firma Applied Films bis zu einer optischen Dichte von 2, 3 metallisiert. Es wurde festgestellt, dass die Metalladhäsion für alle drei unter gleichen Bedingungen metallisierten Proben hervorragend war.

### Beispiel 4

Die Folienherstellung erfolgte wie in Beispiel 1, außer dass die Fördergeschwindigkeit des Extruders der Schicht A auf 64 U/min erhöht wurde, was zu einer Folie mit einer Schichtdicke der PA-Schicht auf der orientierten S-BOPP-Folie von etwa 2,5 µm führte.

Die Folie wies das gleiche brilliante Aussehen wie zuvor auf, zeigte jedoch aufgrund der hohen Steifigkeit der äußeren Polyamidschicht (Schicht A) mit der hohen Oberflächenspannung eine hohe Einrolltendenz.

### Beispiel 5

Die Folienherstellung erfolgte im wesentlichen wie in Beispiel 1, außer dass für die Schicht B (Haftschicht) eine Mischung aus 50% Bynel 21 E 781 und 50% HP 522 HPP verwendet wurde.

Die erhaltene Folie wies ein verbessertes Aussehen auf, eine sehr gute strukturelle Integrität und eine hervorragende Haftung der Polyamidschicht (Schicht A).

Da beobachtet wurde, dass es an der Kante der äußeren Schmelzdüse für die Polyamidextrusion zu einer Ansammlung von Polyamid kam, die in Verbindung mit der Luftmessereinwirkung zu einer erkennbaren Streifigkeit der Folienoberfläche führte, wurde für die nachfolgenden Beispiele 6 bis 15 die Beschickung der Schmelzedüsen für die Schichten A bis E umgekehrt, so dass die Polyamidschicht nunmehr diejenige Seite der Schmelze bildete, die direkt mit der Kühlwalze in Kontakt kam. In den nachfolgenden Beispielen 6 bis 15 ist die Polyamidschicht somit die Schicht E.

### Beispiel 6

Es erfolgte eine Koextrusion von 5 verschiedenen Polymeren durch 5 Breitschlitzdüsen in der folgenden Anordnung:

| | |
|---|---|
| Schicht A: | TD 110 BF, Extruder-Fördergeschwindigkeit 25 U/min; |
| Schicht B: | HP 522 H, Extruder mit Schmelzepumpe, Fördergeschwindigkeit 35 U/min; |
| Schicht C: | HP 522 H, Kernextruder mit Schmelzepumpe, Fördergeschwindigkeit 46 U/min; |
| Schicht D: | 50% Bynel 50 E 739 und 50% HP 522 H; Extruder mit Schmelzepumpe, Fördergeschwindigkeit 8 U/min. |
| Schicht E: | PA 3426; Extruderfördergeschwindigkeit 12 U/min. |

Die auf der Kühlwalze erhaltene Primärfolie wurde simultan in MD 8,6-fach und in TD 7-fach gereckt, wobei eine Folie mit einer Dicke von 20 µm erhalten wurde und die Dicke der Polyamidschicht (Schicht E) etwa 0,6 µm betrug.

Die in einer Breite von 800 mm hergestellte S-BOPP-Folie von Beispiel 6 wies ein besseres Gesamtaussehen auf als die in den vorausgehenden Beispielen 1 bis 5 hergestellten Folien, indem keine Streifen mehr erkennbar waren. Die Oberflächenspannung der PA-Außenschicht wurde zu etwa 50 dyn/cm ermittelt.

### Beispiel 7

Die Folienherstellung erfolgte wie in Beispiel 6, außer dass die LISIM®-Reckanlage so justiert wurde, dass in TD auf das 7,5-fache gereckt wurde und die fertige S-BOPP-Folie eine Breite von 900 mm aufwies, und es wurde eine 4000m lange Rolle hergestellt.

### Beispiel 8

Die Folienherstellung erfolgte wie in Beispiel 7, und es wurde eine 8000m lange Rolle für Metallisierungszwecke hergestellt, wobei die Oberfläche der Polyamid-Außenschicht (Schicht E) der letzten 2000 Folienmeter unter Bedingungen, wie sie für BOPP-Folien üblich sind, einer Flammenbehandlung unterzogen wurden.

Die flammenbehandelte Oberfläche wies eine Oberflächenspannung von mehr als 55 dyn/cm auf.

Die in Beispiel 8 hergestellte Folie wurde auf übliche Weise mit Aluminiumdampf so vakuumbeschichtet, dass die optische Dichte 2,3 betrug. Dabei wurde die Polyamid-Oberfläche der Folie vor der Metallisierung auf unterschiedliche Weise vorbehandelt, und zwar wurden

| | |
|---|---|
| 1200m | einer Flammenbehandlung und einer In-Vakuum-Plasmabehandlung unterzogen; |
| 800m | ausschließlich einer Flammenbehandlung unterzogen; |
| 4500m | wurden nicht zusätzlich behandelt; und |
| 1500m | wurden ausschließlich einer in In-Vakuum-Plasmabehandlung unterzogen. |

Die Ergebnisse der Metallisierung nach den unterschiedlichen Vorbehandlungen sind in der beigefügten Tabelle am Ende nach Beispiel 18 gesondert aufgeführt.

### Beispiel 9

Die Folienherstellung erfolgte wie in Beispiel 8, außer dass die gesamten 2000m der PA-Außenschicht (Schicht E) einer Flammbehandlung unter den für BOPP-Folien üblichen Bedingungen unterzogen wurden.

### Beispiel 10

Die Folienherstellung erfolgte wie in Beispiel 7, außer dass die Dicke der PA-Schicht (Schicht E) auf etwa 1,2 µm erhöht wurde.

Die in den Beispielen 7, 9 und 10 hergestellten Folien wurden auf einer Schneidmaschine zu einer Verbundrolle kombiniert und unter identischen Bedingungen einer Vakuumbeschichtung mit einer klaren keramischen BarriereBeschichtung (SiOx) unterzogen.

### Beispiel 11

Die Folienherstellung erfolgte wie in Beispiel 7, außer dass beim simultanen Recken das Reckverhältnis in MD 9 und in TD 7,5 betrug und die Fördergeschwindigkeit des Extruders für die Kernschicht so eingestellt wurde, dass eine gesamte Foliendicke von 12 µm erhalten wurde, wobei die Dicke der Polyamidschicht (Schicht E) etwa 0,75 µm betrug.

### Beispiel 12

Die Folienherstellung erfolgte wie in Beispiel 11, außer dass die Anlagengeschwindigkeit und die Fördergeschwindigkeit des Kernextruders so eingestellt wurden, dass eine Folie mit einer Gesamtdicke von 15 µm erhalten wurde, wobei die Fördergeschwindigkeit des Extruders für die Schicht E auf 24 U/min eingestellt wurde, was eine Dicke der PA-Schicht von 0,65 µm ergab.

### Beispiel 13

In diesem Beispiel sowie den beiden nachfolgenden Beispielen 14 und 15 wurde die Dicke der Polyamidschicht (Schicht E) variiert, um den Einfluss der Dicke der PA-Schicht auf die Bedrückbarkeit und Beschichtbarkeit der Mehrschichtfolie zu ermitteln.

Die Folienherstellung erfolgte in Beispiel 13 wie in Beispiel 12, außer dass die Dicke der Polyamidschicht (Schicht E) auf etwa 0,38 µm erhöht wurde, indem man die Fördergeschwindigkeit des Extruders auf 12 U/min erhöhte.

### Beispiel 14

Die Folienherstellung erfolgte wie in Beispiel 11, außer dass die Dicke der Polyamidschicht (Schicht E) vermindert wurde, und zwar auf etwa 0,2 µm, indem man die Fördergeschwindigkeit des Extruders für Schicht E auf 6 U/min verminderte.

### Beispiel 15

Die Folienherstellung erfolgte wie in Beispiel 11, außer dass die Dicke der Polyamidschicht stärker vermindert wurde, indem man die Fördergeschwindigkeit des Extruders für die Schicht E auf nur 3 U/min verminderte.

Die erhaltenen S-BOPP-Folien einer Dicke von 15 µm zeigten eine gute, gleichmäßige Oberflächenbedeckung durch die sehr dünne Schicht von weniger als 0,1 µm aus dem niederkristallinen Polyamid.

Alle 5-schichtigen Folien der Beispiele 1 bis 15 wiesen eine hohe Oberflächenspannung und hervorragende optische Eigenschaften und Festigkeitseigenschaften auf, die der Tabelle entnommen werden können.

### Vor Beispiel 16:

In den nachfolgenden Beispielen wurden 7-schichtige Folien mit einer 400 mm breiten Breitschlitzdüse unter Verwendung der obigen 5 Extruder wie folgt hergestellt.

| | |
|---|---|
| Schicht A: | Zweischnecken-Co-Extruder zur Extrusion von 1 µm TD 120 BF, koronabehandelt; |
| Schicht B: | Zweischneckenextruder: HP 522 H mit Additiven; |
| Schicht C: | 35 mm Einschneckenextruder: Haftschicht einer Dicke von 1 µm aus 50% HP 522 H/50% Bynel 50 E 739; |
| Schicht D: | 35 mm Einschneckenextruder: Polyamid-Barriere; |
| Schicht E: | gleicher Extruder und gleiches Material wie Schicht C; |
| Schicht F: | gleicher Extruder und gleiches Material wie Schicht B; |
| Schicht G: | 50 mm Einschneckenextruder mit Schmelzepumpe, Extrusion einer Schicht von 1 µm TD 110 BF. |

### Beispiel 16

Eine Folie mit der 7-schichtigen, eingangs beschriebenen Struktur wurde extrudiert, und die auf der Kühlwalze gebildete Primärfolie wurde 8,5-fach in MD und 5,5-fach in TD gereckt, wobei eine Folie einer Dicke von 20 µm erhalten wurde, die in ihrem Zentrum eine PA-Barriere (Schicht D) einer Dicke von 1,45 µm aufwies.

### Beispiel 17

Die Folienherstellung erfolgte wie in Beispiel 16, außer dass die Fördergeschwindigkeit des Extruders für die Polyamid-Barriere (Schicht D) erhöht wurde, so dass eine Schichtdicke von 1,75 µm erhalten wurde.

### Beispiel 18

Die Folienherstellung erfolgte wie in Beispiel 17, außer dass die Fördergeschwindigkeit des Extruders für die Polyamid-Barriere (Schicht D) weiter gesteigert wurde, so dass eine Barriere mit einer Dicke von 2,15 µm erhalten wurde.

### Ergebnisse:

Die Eigenschaften der in den Beispielen 1 bis 18 hergestellten Folien sind, soweit sie gemessen wurden, in der nachfolgenden Tabelle wiedergegeben.

Die Ergebnisse der in den Beispielen geschilderten Folienherstellungsversuche zeigen deutlich, dass gemäß der vorliegenden Erfindung BOPP-Folien mit hervorragenden Barriereeigenschaften und einer Kombination weiterer ausgezeichneter und für Verpackungszwecke wünschenswerter Eigenschaften erhalten werden, wobei sehr gute Folienfestigkeiten, -steifigkeiten, hervorragende optische Eigenschaften mit hervorragenden Eigenschaften bezüglich Aroma- und Geruchsdichtigkeit und hervorragende sonstige Barriereeigenschaften, die der Tabelle entnehmbar sind, erhalten werden.

Als Vergleichswerte für typische BOPP-Folien, die durch sequenzielles Recken erhalten werden, können dabei Werte für die Zugfestigkeit von etwa 140 N/mm² (MD) bzw. 280 N/mm². (TD), für die Reißdehnung im Bereich von 150-250% (MD) bzw. 50-60% (TD) und für den E-Modul im Bereich von 2000-2200 N/mm² (MD) bzw. bis 3800 N/mm² (TD) herangezogen werden.

Dabei ist darauf hinzuweisen, dass die Aroma- und Geruchsdichtigkeit auch für Folien beobachtet wird, die weder eine Metallisierung noch eine Keramikbeschichtung aufweisen. Der Bereich der in den Beispielen angegebenen Herstellungsbedingungen ist nur durch die während der Versuche zur Verfügung stehenden Ausrüstungen beschränkt, die angegebenen Verfahrensbedingungen stellen jedoch nicht die Grenzen der vorliegenden Erfindung bzw. des Verfahrens zur Herstellung der erfindungsgemäßen Folien dar. In Abhängigkeit von den beabsichtigten Verwendungen der Folien können beispielsweise Dicken der Barriere bis zu 10 µm erhalten werden, und zwar insbesondere für die im Kern angeordnete Barriere, wenn das wünschenswert sein sollte.

Ferner ist darauf hinzuweisen, dass die Bedingungen des simultanen Reckens so gesteuert werden können, dass die erhaltenen Folien einer Stabilisierung unterzogen werden, so dass sie eine Dimensionsstabilität aufweisen, bei der in einer oder beiden ihrer Hauptrichtungen, die MD bzw. TD ihrer Herstellung entsprechen, ein Schrumpf von 5% oder weniger erhalten wird. Es können die Reckbedingungen jedoch auch so gewählt werden, dass der Schrumpf in einer oder beiden Richtungen bei 135°C bis zu 20% beträgt.

Es ist ferner darauf hinzuweisen, dass im Falle der 7-schichtigen Struktur, wie sie durch die Beispiele 16 bis 18 beschrieben wird, eine der Polypropylenschichten auch unter Verwendung von Polypropylenregenerat oder unter Verwendung von Polyolefinen, die sich von dem für die andere Schicht (Schicht B) verwendeten Polypropylen unterscheiden, hergestellt werden kann, und zwar in Abhängigkeit von der verwendeten Endverwendung, wobei die Tatsache genutzt wird, dass durch die zentrale PA-Barriere alle Reinheitsanforderungen bezüglich der anderen Folienseite gewährleistet bleiben.

Ergänzend zu den Folieneigenschaften, die in der Tabelle wiedergegeben werden, ist darauf hinzuweisen, dass einige der angegebenen Werte sich während der Alterung der Folien verändern, wobei besonders wichtig eine Erhöhung der Werte für den Elastizitätsmodul um etwa 30% innerhalb von 60 Tagen nach der Herstellung ist. Von Wichtigkeit ist ferner, dass die Oberflächenspannung der behandelten oder unbehandelten erfindungsgemäßen Folie, bei der die PA-Barriere eine Außenschicht darstellt, über die Zeit im wesentlichen konstant bleibt, was einen deutlichen Vorteil gegenüber normalen BOPP-Folien darstellt, bei denen sich die Oberflächenspannung nach einer Oberflächenbehandlung (Flammenbehandlung; Plasmabehandlung) über die Zeit relativ rasch ändert.

Erfindungsgemäße Folien müssen daher nicht sofort beschichtet (metallisiert, keramikbeschichtet) werden, und die Beschichtung kann unter Verwendung bereit gehaltener fertiger Folien je nach Bedarf erfolgen.

Aufgrund der hervorragenden Barriereeigensehaften eignen sich die Folien für alle Verpackungszwecke, bei denen es darauf ankommt, dass die verpackte Ware keinen Aromaverlust erleidet und/oder dass keine Geruchsentwicklung durch die Verpackung hindurch erfolgt. Die Sauerstoffdurchlässigkeit und die Wasserdampfdurchlässigkeit der erfindungsgemäßen Folien sind so, dass sie für die meisten Verwendungen geeignet sind, für die derzeit die teureren und aufgrund ihrer höheren Dichte schwereren beschichteten Polyesterfolien verwendet werdem müssen.

Besonders bevorzugte Verwendungen sind Verwendungen für die Verpackung von Lebensmitteln, beispielsweise frischen Lebensmitteln, Süßwaren und Konditoreiwaren, und von Genussmitteln, zu denen auch beispielsweise Kaffee und Tee oder Tabak gezählt werden können. Auch für die Verpackung von anderen Waren, z.B. von Pharmazeutika, können die Folien verwendet werden. Aufgrund des cellophanartigen bzw. zellglasartigen Aussehens und ihres Griffs können die Folien auch für alle Anwendungen eingesetzt werden, bei denen der Konsument cellophanartige Materialien erwartet. Durch die gute Bedruckbarkeit eignen sich die erfindungsgemäßen Folien auch hervorragend für werbewirksam gestaltete Verpackungen aller Art.

Die folgenden Aspekte sind auch Teil dieser Anmeldung:
1. Barrierefolie für Verpackungszwecke, insbesondere für die Verpackung von Lebens- und Genussmitteln, in Form einer Mehrschichtfolie auf der Basis mindestens einer Trageschicht in Form einer biaxial orientierten Polypropylenfolie (PP-Folie) mit mindestens einer koextrudierten funktionalen Schicht auf der Basis eines amorphen oder teilkristallinen Polyamids (PA) oder einer Mischung eines solchen Polyamids mit Ethylen-Vinylalkohol-Copolymeren (EVOH),
   dadurch gekennzeichnet, dass sie durch simultanes Recken einer koextrudierten mehrschichtigen Primärfolie hergestellt ist, wobei die funktionale PA-Schicht eine Außenschicht der Folie bildet.
2. Hochfeste brilliante Barrierefolie für Verpackungszwecke, insbesondere für die Verpackung von Lebensmitteln, in Form einer Mehrschichtfolie auf der Basis mindestens einer Trageschicht in Form einer biaxial orientierten Polypropylenfolie (PP-Folie) mit mindestens einer koextrudierten funktionalen Schicht auf der Basis eines amorphen oder teilkristallinen Polyamids (PA) oder einer Mischung eines solchen Polyamids mit Ethylen-Vinylalkohol-Copolymeren (EVOH),
   dadurch gekennzeichnet, dass sie durch einer koextrudierten mehrschichtigen Primärfolie hergestellt ist, wobei die funktionale PA-Schicht eine zentrale Innenschicht der Folie bildet, die zwischen zwei Trageschichten angeordnet ist.
3. Folie nach einem der Aspekte 1 oder 2, dadurch gekennzeichnet, dass die Zugfestigkeit der Folie und ihr Elastizitätsmodul in Maschinenrichtung (MD) und ihre Reißdehnung in Querrichtung (TD) gleich oder höher sind als in TD bzw. MD.
4. Folie nach einem der Aspekte 1 oder 2, dadurch gekennzeichnet, dass die Summe der E-Module in Längs- und Querrichtung 3500 N/mm², vorzugsweise 4500 N/mm² übersteigt.
5. Folie nach Aspekt 3 oder 4, dadurch gekennzeichnet, dass ihre Zugfestigkeit (ASTM D 822) in MD im Bereich von 170-280 N/mm² liegt, und in TD im Bereich von 130-215 N/mm² liegt,
6. Folie nach Aspekt 3, 4 oder 5, dadurch gekennzeichnet, dass ihre Reißdehnung (ASTM D 82) in MD im Bereich von 50-120% liegt, und in TD im Bereich von 100-220% liegt.
7. Folie nach einem der Aspekte 1 und 3 bis 6, dadurch gekennzeichnet, dass sie einen Glanz (Gloss; ASTM 2457) über 100 aufweist.
8. Folie nach einem der Aspekte 1 und 3 bis 7, dadurch gekennzeichnet, dass sie auf der PA-Barriere eine Metallisierung oder eine klare SiOx- oder AlOx-Keramikbeschichtung aufweist und ihre Sauerstoffdurchlässigkeit (OTR) bei 23°C und 75% relative Luftfeuchtigkeit unter 0,50 cm³/(m²datm),insbesondere unter 0,20 cm³/(m²datm), und ihre Wasserdampfdurchlässigkeit (WVTR; ASTM E 96) unter tropischen Bedingungen (38°C; 90% relative Luftfeuchtigkeit) unter 0,5g/(m²d) liegt.
9. Folie nach einem der Aspekte 1 und 3 bis 8, dadurch gekennzeichnet, dass ihr Schichtaufbau mindestens dreischichtig ist und eine PP-Trageschicht, eine darauf angeordnete Haftschicht und eine über der Haftschicht angeordnete äußere PA-Barriere umfasst.
10. Folie nach Aspekt 9, dadurch gekennzeichnet, dass sie mindestens vierschichtig ist und auf der der PA-Barriere abgewandten Seite der PP-Trageschicht mindestens eine weitere Schicht aufweist, die heißsiegelfähig ist.
11. Folie nach Aspekt 2, dadurch gekennzeichnet, dass ihr Schichtaufbau mindestens fünfschichtig ist und die Abfolge der Schichten eine erste PP-Trageschicht, eine erste Haftschicht, eine PA-Barriere, eine zweite Haftschicht und eine zweite PP-Trageschicht umfasst.
12. Folie nach Aspekt 11, dadurch gekennzeichnet, dass sie zusätzlich über der ersten PP-Trageschicht eine für eine Corona- oder Plasmabehandlung geeignete thermoplastische Außenschicht, und/oder über der zweiten PP-Trageschicht eine heißsiegelfähige thermoplastische Außenschicht aufweist.
13. Folie nach Aspekt 12, dadurch gekennzeichnet, dass eine der PP-Trageschichten ein Regenerat-PP enthält.
14. Folie nach einem der Aspekte 9 bis 13, dadurch gekennzeichnet, dass die an die PA-Barriere angrenzenden Haftschichten von PP gebildet werden, das durch Vermischen mit einem anhydrid-modifiziertem PP, einem Polyethylen-Copolymer oder einem anhydrid-modifizierten Acrylharz modifiziert ist, wobei die PP-Menge der Haftschicht bis zu75 Gew.-% beträgt.
15. Folie nach Aspekt 1 oder 2, dadurch gekennzeichnet, dass die Dicke der PA-Barriere im Bereich von 0,1 bis 10 µm liegt.
16. Folie nach Aspekt 1, dadurch gekennzeichnet, dass die Dicke der PA-Barriere im Bereich von 0,1 bis 5 µm liegt.
17. Folie nach Aspekt 2, dadurch gekennzeichnet, dass die Dicke der im Inneren der Mehrschichtfolie angeordneten PA-Barriere im Bereich von 0,5 bis 10 µm liegt.
18. Folie nach einem der Aspekte 1 bis 17, dadurch gekennzeichnet, dass die Dicke der Folie im Bereich von 8 bis 80 µm liegt.
19. Folie nach einem der Aspekte 1 bis 18, dadurch gekennzeichnet, dass eine oder mehrere der PP-Trageschicht(en), der Haftschicht(en) und/oder die Barriere Zusätze enthält/enthalten, die ausgewählt sind aus einer Gruppe, die mineralische oder organische Zusätze zur Bildung von Mikrohohlräumen, Füllstoffe, Absorptionsmittel, UV- und Licht-Schutzmittel, Farbstoffe und deckende Pigmente umfasst.
20. Folie nach einem der Aspekte 1 bis 19, dadurch gekennzeichnet, dass sie nach einem Verfahren gemäß den Aspekten 21 bis 26 erhältlich ist.
21. Verfahren zur Herstellung einer Barrierefolie für Verpackungszwecke nach einem der Aspekte 1 bis 19, dadurch gekennzeichnet, dass man die die Schichten der Mehrschichtfolie bildenden Polymeren als Schmelzen aus der erforderlichen Anzahl von Breitschlitzdüsen auf eine Kühlwalze (Chill-Roll) koextrudiert und die gebildete Primär-Mehrschichtfolie einem berührungsfreien Simultanrecken mit einer 40- bis 80-fachen Flächenzunahme auf einer simultanen Reckanlage mit Linearmotorbetrieb (LISIM®) oder auf einer mechanischen simultanen Reckanlage unterzieht.
22. Verfahren nach Aspekt 21, dadurch gekennzeichnet, dass die Primär-Mehrschichtfolie in Maschinenrichtung (MD) auf wenigstens des 6fache ihrer Länge gereckt wird.
23. Verfahren nach Aspekt 22, dadurch gekennzeichnet, dass die Primär-Mehrschichtfolie simultan in MD auf wenigstens das 7fache und in Querrichtung (TD) auf weniger als das 7fache gereckt wird.
24. Verfahren nach Aspekt 22, dadurch gekennzeichnet, dass die Primär-Mehrschichtfolie simultan in MD auf mehr als das 8fache, vorzugsweise auf wenigstens das 9fache, und in TD auf weniger als das 8fache gereckt wird.
25. Verfahren nach einem der Aspekte 21 bis 24, dadurch gekennzeichnet, dass die PA-Schicht als diejenige Außenschicht der Primärfolie koextrudiert wird, die direkten Kontakt mit der Kühlwalze aufweist.
26. Verfahren zur Herstellung einer Barrierefolie für Verpackungszwecke nach einem der Aspekte 1 bis 19, dadurch gekennzeichnet, dass man die die Schichten der Mehrschichtfolie bildenden Polymeren als Schmelzen aus einer Ringdüse koextrudiert und einem simultanen Recken nach dem BUBBLE- oder dem DOUBLE BUBBLE-Verfahren unterzieht, wobei eine Flächenzunahme auf das 40- bis 80-fache bewirkt wird.
27. Verwendung einer Barrierefolie nach einem der Aspekte 1 bis 20 als aroma-, geruchs- und sauerstoffdichten Verpackungsfolie für Lebens- und Genussmittel.
28. Verwendung nach Aspekt 26 einer Barrierefolie mit einer klaren SiOx- oder AlOx-Keramikbeschichtung gemäß Aspekt 8 zur Herstellung von aroma-, geruchs- und sauerstoffdichten Sichtverpackungen für Lebens- und Genussmittel.

## Patentansprüche

1. Hochfeste brilliante Barrierefolie für Verpackungszwecke, insbesondere für die Verpackung von Lebensmitteln, in Form einer Mehrschichtfolie auf der Basis mindestens einer Trageschicht in Form einer biaxial orientierten Polypropylenfolie (PP-Folie) mit mindestens einer koextrudierten funktionalen Schicht auf der Basis eines amorphen oder teilkristallinen Polyamids (PA) oder einer Mischung eines solchen Polyamids mit Ethylen-Vinylalkohol-Copolymeren (EVOH),
**dadurch gekennzeichnet, dass** sie durch simultanes Recken einer koextrudierten mehrschichtigen Primärfolie hergestellt ist, bei dem man die die Schichten der Mehrschichtfolie bildenden Polymeren als Schmelzen aus der erforderlichen Anzahl von Breitschlitzdüsen auf eine Kühlwalze (Chill-Roll) koextrudiert und die gebildete Primär-Mehrschichtfolie einem berührungsfreien Simultanrecken auf einer simultanen Reckanlage mit Linearmotorbetrieb (LISIM®) unterzieht, wobei die funktionale PA-Schicht eine zentrale Innenschicht der Folie bildet, die zwischen zwei Trageschichten angeordnet ist, und die Dicke der im Innern der Mehrschichtfolie angeordneten PA-Barriere im Bereich von 0,5 bis 10 µm liegt.

2. Folie nach Anspruch 1, **dadurch gekennzeichnet, dass** die Zugfestigkeit der Folie und ihr Elastizitätsmodul in Maschinenrichtung (MD) und ihre Reißdehnung in Querrichtung (TD) gleich oder höher sind als in TD bzw. MD.

3. Folie nach Anspruch 1, **dadurch gekennzeichnet, dass** die Summe der E-Module in Längs- und Querrichtung 3500 N/mm², vorzugsweise 4500 N/mm² übersteigt.

4. Folie nach Anspruch 2 oder 3, **dadurch gekennzeichnet, dass** ihre Zugfestigkeit (ASTM D 822) in MD im Bereich von 170-280 N/mm² liegt, und in TD im Bereich von 130-215 N/mm² liegt.

5. Folie nach Anspruch 2, 3 oder 4, **dadurch gekennzeichnet, dass** ihre Reißdehnung (ASTM D 82) in MD im Bereich von 50-120% liegt, und in TD im Bereich von 100-220% liegt.

6. Folie nach einem der Ansprüche 1 bis 5, **dadurch gekennzeichnet, dass** sie einen Glanz (Gloss; ASTM 2457) über 100 aufweist.

7. Folie nach einem der Ansprüche 1 bis 6, **dadurch gekennzeichnet, dass** sie auf der PA-Barriere eine Metallisierung oder eine klare SiOx- oder AlOx-Keramikbeschichtung aufweist und ihre Sauerstoffdurchlässigkeit (OTR) bei 23°C und 75% relative Luftfeuchtigkeit unter 0,50 cm³/(m²datm), insbesondere unter 0,20 cm³/(m²datm), und ihre Wasserdampfdurchlässigkeit (WVTR; ASTM E 96) unter tropischen Bedingungen (38°C; 90% relative Luftfeuchtigkeit) unter 0,5 g/(m²d) liegt.

8. Folie nach einem der Ansprüche 1 bis 7, **dadurch gekennzeichnet, dass** ihr Schichtaufbau mindestens dreischichtig ist und eine PP-Trageschicht, eine darauf angeordnete Haftschicht und eine über der Haftschicht angeordnete äußere PA-Barriere umfasst.

9. Folie nach Anspruch 8, **dadurch gekennzeichnet, dass** sie mindestens vierschichtig ist und auf der der PA-Barriere abgewandten Seite der PP-Trageschicht mindestens eine weitere Schicht aufweist, die heißsiegelfähig ist.

10. Folie nach Anspruch 1, **dadurch gekennzeichnet, dass** ihr Schichtaufbau mindestens fünfschichtig ist und die Abfolge der Schichten eine erste PP-Trageschicht, eine erste Haftschicht, eine PA-Barriere, eine zweite Haftschicht und eine zweite PP-Trageschicht umfasst.

11. Folie nach Anspruch 10, **dadurch gekennzeichnet, dass** sie zusätzlich über der ersten PP-Trageschicht eine für eine Corona- oder Plasmabehandlung geeignete thermoplastische Außenschicht, und/oder über der zweiten PP-Trageschicht eine heißsiegelfähige thermoplastische Außenschicht aufweist.

12. Folie nach Anspruch 11, **dadurch gekennzeichnet, dass** eine der PP-Trageschichten ein Regenerat-PP enthält.

13. Folie nach einem der Ansprüche 8 bis 12, **dadurch gekennzeichnet, dass** die an die PA-Barriere angrenzenden Haftschichten von PP gebildet werden, das durch Vermischen mit einem anhydrid-modifiziertem PP, einem Polyethylen-Copolymer oder einem anhydrid-modifizierten Acrylharz modifiziert ist, wobei die PP-Menge der Haftschicht bis zu 75 Gew.-% beträgt.

14. Folie nach einem der Ansprüche 1 bis 13, **dadurch gekennzeichnet, dass** die Dicke der Folie im Bereich von 8 bis 80 µm liegt.

15. Folie nach einem der Ansprüche 1 bis 14, **dadurch gekennzeichnet, dass** eine oder mehrere der PP-Trageschicht(en), der Haftschicht(en) und/oder die Barriere Zusätze enthält/enthalten, die ausgewählt sind aus einer Gruppe, die mineralische oder organische Zusätze zur Bildung von Mikrohohlräumen, Füllstoffe, Absorptionsmittel, UV-und Licht-Schutzmittel, Farbstoffe und deckende Pigmente umfasst.

16. Verfahren zur Herstellung einer Barrierefolie für Verpackungszwecke nach einem der Ansprüche 1 bis 15, **dadurch gekennzeichnet, dass** man die die Schichten der Mehrschichtfolie bildenden Polymeren als Schmelzen aus der erforderlichen Anzahl von Breitschlitzdüsen auf eine Kühlwalze (Chill-Roll) koextrudiert und die gebildete Primär-Mehrschichtfolie einem berührungsfreien Simultanrecken mit einer 40- bis 80-fachen Flächenzunahme auf einer simultanen Reckanlage mit Linearmotorbetrieb (LISIM®) oder auf einer mechanischen simultanen Reckanlage unterzieht, wobei die Primär-Mehrschichtfolie in Maschinenrichtung (MD) auf wenigstens des 6fache ihrer Länge gereckt wird.

17. Verfahren nach Anspruch 16, **dadurch gekennzeichnet, dass** die Primär-Mehrschichtfolie simultan in MD auf wenigstens das 7fache und in Querrichtung (TD) auf weniger als das 7fache gereckt wird.

18. Verfahren nach Anspruch 16, **dadurch gekennzeichnet, dass** die Primär-Mehrschichtfolie simultan in MD auf mehr als das 8fache, vorzugsweise auf wenigstens das 9fache, und in TD auf weniger als das 8fache gereckt wird.

19. Verfahren nach einem der Ansprüche 16 bis 18, **dadurch gekennzeichnet, dass** die PA-Schicht als diejenige Außenschicht der Primärfolie koextrudiert wird, die direkten Kontakt mit der Kühlwalze aufweist.

20. Verwendung einer Barrierefolie nach einem der Ansprüche 1 bis 15 als aroma-, geruchs- und sauerstoffdichte Verpackungsfolie für Lebens-und Genußmittel.

21. Verwendung nach Anspruch 20 einer Barrierefolie mit einer klaren SiOx- oder AlOx-Keramikbeschichtung gemäß Anspruch 8 zur Herstellung von aroma-, geruchs-und sauerstoffdichten Sichtverpackungen für Lebens-und Genussmittel.
